# EUROPEAN PATENT APPLICATION

(11) **EP 4 455 759 A1**
(43) Date of publication of application: **30.10.2024**
(21) Application number: 22909326.5
(22) Date of filing: 18.08.2022
(51) Int. Cl.: G02B 26/10, G02F 1/035

(54) **LIGHT BEAM SCANNING SYSTEM**

(30) Priority: 22.12.2021 CN 202111577494
(71) Applicant: Windsurf Technology (Wuxi) Ltd., Wuxi, Jiangsu 214122 (CN)
(72) Inventor: ZHENG, Xuezhe, Suzhou, Jiangsu 215000 (CN); LI, Chenlei, Suzhou, Jiangsu 215000 (CN); WU, Hao, Suzhou, Jiangsu 215000 (CN); DU, Yinchao, Suzhou, Jiangsu 215000 (CN)
(74) Representative: Becker, Eberhard
(86) International application number: PCT/CN2022/113323
(87) International publication number: WO 2023/115998

(57) **Abstract**

The present application relates to the technical field of optical scanning, and specifically discloses a light beam scanning system. The system comprises a beam splitting apparatus, an optical waveguide array, a light beam combining member, a light beam adjusting apparatus and a phase adjusting apparatus. The beam splitting apparatus receives a laser light beam, and divides the laser light beam into a plurality of sub-beams and then emits the sub-beams; the optical waveguide array is used to receive the plurality of sub-beams and transmit the plurality of sub-beams to a predetermined waveguide emergent end; the light beam combining member is connected to the optical waveguide array, each sub-beam emitted by the waveguide emergent end is subjected to diffraction and superposition in the light beam combining member, and the combined beam is focused on a predetermined light beam emergent surface; the light beam adjusting apparatus is used to expand and collimate the light beam emitted from the light beam emergent surface to form a scanning light beam; the phase adjusting apparatus is used to adjust the relative phase distribution of the waveguide wavelets in the optical waveguide array, so as to adjust the focus position of the combined light beam on the light beam emergent surface, and carry out light beam scanning in a first direction. Thus, the problem of large coupling interference of the phase control waveguide array is solved.

## Description

### Technical Field

The present invention relates to the technical field of optical scanning, and in particular to a light beam scanning system.

### Description of Related Art

Beam control is a key technology in fields such as laser radar and free-space optical communication and exhibits potential applications in fields such as holographic display and biological imaging.

At present, beam control is achieved most of the time through optical phased array (OPA) methods. For instance, the input laser is equally divided into N array waveguides through a star coupler, a controllable phase-shift array is integrated into each array waveguide, and each phase-controlled array waveguide is connected to a second-order linear waveguide grating. The linear waveguide grating is used as a surface vertical emission output device, and the multiple linear waveguide grating emitters are arranged equidistantly to form a one-dimensional optical antenna array. By adjusting the relative phase between the array waveguides, the sub-beams emitted by the array formed by the grating emitters are coherently superimposed in space, and the scanning control of the light beam in the array direction is thus achieved.

However, as a transmitting device, the waveguide grating features both the functions of beam combining and vertical outputting on the plane waveguide surface, and beam combining without grating sidelobes requires sub-wavelength emission at the waveguide grating spacing. In order for the output light beam to have a small divergence angle, the waveguide grating needs to be a large-sized weak grating structure. In order to meet the parallel emission of small spacing and long waveguide, large coupling interference between waveguide grating is inevitably be caused.

### SUMMARY

### Technical Problems

Based on the above, it is necessary to provide a light beam scanning system to address the above problems.

### Solutions to Problems

### Technical Solutions

A light beam scanning system is provided, and the light beam scanning system includes:
a beam splitting apparatus receiving a laser light beam, dividing the laser light beam into a plurality of sub-beams, and emitting the sub-beams;
an optical waveguide array arranged in an outputting direction of the beam splitting apparatus and used to receive the plurality of sub-beams and transmit the plurality of sub-beams to a predetermined waveguide emergent end;
a light beam combining member connected to the optical waveguide array, where each sub-beam emitted by the waveguide emergent end is subjected to diffraction and superposition in the light beam combining member, and a combined beam is focused on a predetermined light beam emergent surface;
a light beam adjusting apparatus arranged in an emergent direction of the light beam emergent surface and used to expand and collimate a light beam emitted from the light beam emergent surface to form a scanning light beam; and
a phase adjusting apparatus connected to the optical waveguide array and adjusting a relative phase distribution of sub-waveguides in the optical waveguide array, so as to adjust a focus position of a combined light beam on the light beam emergent surface and carry out light beam scanning in a first direction.

In one of the embodiments, the predetermined waveguide emergent end is arranged on a circumference of a Rowland circle with a radius of 2R. The predetermined light beam emergent surface is located inside the Rowland circle at a distance 2R from the waveguide emergent end, and R is a positive number.

In one of the embodiments, a spacing between the sub-waveguides at the waveguide emergent end is less than a wavelength of the laser light beam.

In one of the embodiments, the beam splitting apparatus includes a star coupler or a cascaded 1×n waveguide beam splitter, and n is a natural number greater than or equal to 2.

In one of the embodiments, the light beam adjusting apparatus includes a collimating lens assembly.

In one of the embodiments, the phase adjusting apparatus includes a phase modulator.

In one of the embodiments, the phase modulator performs waveguide phase modulation by coupling an optical signal in a silicon waveguide to an electro-optical dielectric layer waveguide on the silicon waveguide by utilizing an electro-optical effect of a medium. Alternatively, the phase modulator performs the waveguide phase modulation by injecting a pin junction current into the silicon waveguide. Alternatively, the phase modulator performs the waveguide phase modulation by a metal heater placed above the silicon waveguide by utilizing a thermo-optical effect of silicon.

In one of the embodiments, the dielectric layer waveguide includes a lithium niobate waveguide.

In one of the embodiments, the light beam scanning system further includes:
a laser switching apparatus used to switch the laser light beam of different wavelengths to the beam splitting apparatus,
where the laser switching apparatus adjusts the focus position of the combined light beam on the light beam emergent surface by switching the laser light beam of different wavelengths, so as to adjust a light beam scanning angle in the first direction.

In one of the embodiments, the light beam scanning system further includes:
a moving platform connected to the light beam adjusting apparatus and used to move the light beam adjusting apparatus in a second direction to perform light beam scanning in the second direction.

### Beneficial Effects of the Invention

### Beneficial Effects

In the light beam scanning system, the laser light beam is divided into a plurality of sub-beams by the beam splitting apparatus, and the optical waveguide array receives the plurality of sub-beams and transmits the sub-beams to the predetermined waveguide emergent end. Each sub-beam emitted by the waveguide emergent end is subjected to diffraction and superposition in the light beam combining member, and the combined beam is focused on the predetermined light beam emergent surface. The light beam output through the light beam emergent surface is expanded, collimated, and output by the light beam adjusting apparatus to form a scanning light beam. Further, the relative phase distribution of the sub-waveguides in the optical waveguide array is adjusted by the phase adjusting apparatus, so that the focus position of the combined light beam on the light beam emergent surface is adjusted, the scanning angle of the scanning light beam is adjusted, and light beam scanning in the first direction is performed. The approach of combining and outputting light beams through waveguide gratings in the related art is changed in this embodiment. Each sub-beam is transmitted to the predetermined waveguide emergent end through the optical waveguide array, so that each sub-beam is subjected to diffraction and superposition in the light beam combining member, and the combined beam is focused on the predetermined light beam emergent surface. By adjusting the relative phase distribution in the waveguide array, the position where the light beam is focused on the light beam emergent surface is adjusted, so that light beam scanning is achieved. Since the conventional waveguide grating array output structure is not used, the problem of large coupling interference caused by both small spacing and long waveguides in the related art is avoided. Further, through the above structure to achieve light beam scanning, the difficulty and costs are lowered.

### BRIEF DESCRIPTION OF THE DRAWINGS

### Description of Drawings

FIG. 1 is a structural diagram of beam control in the related art.
FIG. 2 is a structural block diagram of a light beam scanning system provided by an embodiment of the present application.
FIG. 3 is a schematic top view of the light beam scanning system provided by an embodiment of the present application.
FIG. 4 is a structural block diagram of the light beam scanning system provided by an embodiment of the present application.
FIG. 5 is a schematic top view of the light beam scanning system provided by an embodiment of the present application.
FIG. 6 is a schematic front view of the light beam scanning system provided by an embodiment of the present application.

### Description of Reference Numerals:

100: laser light beam, 200: beam splitting apparatus, 300: optical waveguide array, 310: sub-waveguide, 320: waveguide emergent end, 330: diffusion and transmission region, 340: phase adjusting region, 350: convergence and transmission region, 400: light beam combining member, 410: light beam emergent surface, 500: light beam adjusting apparatus, 600: phase adjusting apparatus, 700: input waveguide, and 800: laser switching apparatus.

### DESCRIPTION OF THE EMBODIMENTS

### Implementation of the Invention

To facilitate understanding of the present invention, the present invention will be described more comprehensively below with reference to the relevant accompanying drawings. The embodiments of the present invention are illustrated in the accompanying drawings. However, the present invention can be implemented in many different forms and is not limited to the embodiments described herein. On the contrary, the purpose of providing these embodiments is to make the disclosed content of the present invention more thorough and comprehensive.

In the disclosure, unless clearly specified and defined otherwise, the terms "installed", "connected", "connecting", "fixed" and other terms should be understood in a broad sense, for instance, it can be a fixed connection, a detachable connection, or an integral connection, it can be a mechanical connection or an electrical connection, it can be a direct connection or an indirect connection through an intermediate medium, and it can be an internal communication between two components or an interaction relationship between two components, unless clearly defined otherwise. For a person having ordinary skill in the art, the specific meaning of the above-mentioned terms in the present invention can be understood according to specific circumstances.

The terms "first" and "second" are only used for descriptive purposes and cannot be understood as indicating or implying relative importance or implicitly indicating the number of indicated technical features. Thus, the features defined with "first" and "second" may explicitly or implicitly include at least one of these features. In the description of the disclosure, "plurality" means at least two, such as two, three, etc., unless otherwise expressly and specifically defined.

Unless otherwise defined, all technical and scientific terms used herein have the same meaning as commonly understood by a person having ordinary skill in the art to which the present invention belongs. The terms used herein in the specification of the present invention are for the purpose of describing specific embodiments only, and are not intended to limit the present invention. As used herein, the term "and/or" includes any and all combinations of one or more of the associated listed items.

As described in the Description of Related Art, beam control has become a key technology in fields such as laser radar and free-space optical communication and exhibits potential applications in fields such as holographic display and biological imaging. Herein, beam control can be achieved mechanically or with an optical phased array (OPA). The optical phased array approach has advantages over the mechanical approach in terms of size, weight, and speed. Further, using the appropriate photonic integrated chip technology, such as silicon photonics technology, it is expected to achieve a chip-level laser radar system in which optical phased arrays and other related optoelectronic devices and circuits are monolithically integrated.

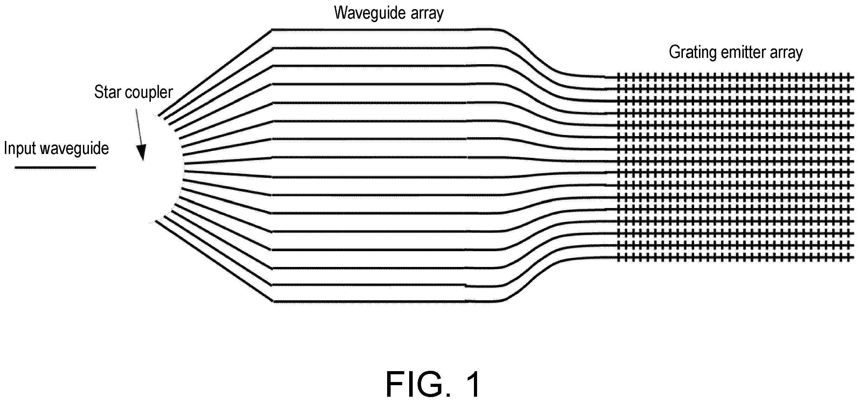

FIG. 1 shows a commonly used solution for OPA beam control based on a photonic integrated chip. To be specific, the input laser is equally divided into N array waveguides through a star coupler, a controllable phase-shift array is integrated into each array waveguide, and each phase-controlled array waveguide is connected to a second-order linear waveguide grating. The linear waveguide grating is used as an emission output device, and the multiple linear waveguide grating emitters are arranged equidistantly to form a one-dimensional optical antenna array. By adjusting the relative phase between the array waveguides, the sub-beams emitted by the array formed by the grating emitters are coherently superimposed in space, and the scanning control of the light beam in the array direction is thus achieved.

In order to effectively suppress sidelobes of the phase-controlled uniform emission gratings, the grating spacing d needs to satisfy d<k/2, where λ is the laser wavelength. Certainly, under certain conditions, this constraint can be relaxed appropriately, that is, it suffices to satisfy d<λ. In the radio frequency field, the relaxed constraint is easier to satisfy due to the larger wavelength, but optical phased arrays usually operate at micron-level wavelengths, such as 1.5 µm, so it is difficult to achieve the above grating spacing requirement. Further, in order to make the divergence angle of the emitting beam as small as possible, a weak waveguide grating is usually used to vertically emit the light field surface in the waveguide over a long distance. If the waveguide distance is relatively close, mutual coupling interference may occur, and as the distance decreases, crosstalk increases. The longer the waveguide, the greater the crosstalk. Crosstalk in the waveguide array can significantly affect the performance of optical phased array. Further, under the same aperture, the array spacing is small, which usually means that more array units are needed, and the difficulty of array phase control grows.

In order to avoid coupling crosstalk between grating emitters and lower the number of phased array units as much as possible, an array spacing of multiple wavelengths is used most of the time. By randomly distributing the unit spacing of the grating emitter array, the grating sidelobes are effectively eliminated. However, in this solution, the energy in the sidelobes of the uniform grating is generally dispersed in space instead of concentrated into the main lobe, so the beam efficiency is lowered.

The present application aims at the above contradiction and provides a beam scanning system.

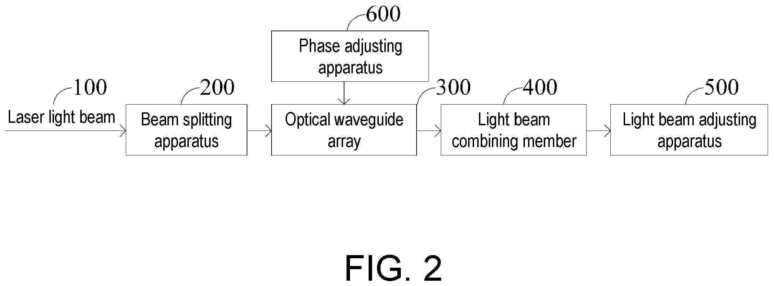

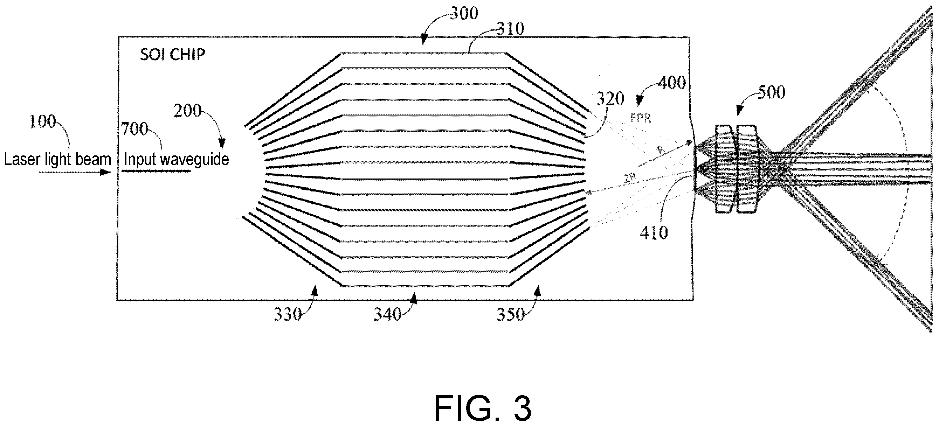

In an embodiment, a light beam scanning system is provided. With reference to FIGS. 2 and 3, the light beam scanning system provided by this embodiment includes a beam splitting apparatus 200, an optical waveguide array 300, a light beam combining member 400, a light beam adjusting apparatus 500, and a phase adjusting apparatus 600. Herein:

The beam splitting apparatus 200 receives a laser light beam 100, divides the laser light beam 100 into a plurality of sub-beams, and then emits the sub-beams. The optical waveguide array 300 is arranged in an outputting direction of the beam splitting apparatus 200 and is used to receive the plurality of sub-beams and transmit the plurality of sub-beams to a predetermined waveguide emergent end 320. The light beam combining member 400 is connected to the optical waveguide array 300, each sub-beam emitted by the waveguide emergent end 320 is subjected to diffraction and superposition in the light beam combining member 400, and a combined beam is focused on a predetermined light beam emergent surface 410. The light beam adjusting apparatus 500 is arranged in an emergent direction of the light beam emergent surface 410 and is used to expand and collimate a light beam emitted from the light beam emergent surface 410 to form a scanning light beam. The phase adjusting apparatus 600 is connected to the optical waveguide array 300 and adjusts a relative phase distribution of sub-waveguides 310 in the optical waveguide array 300, so as to adjust a focus position of a combined light beam on the light beam emergent surface 410 and carry out light beam scanning in a first direction.

To be specific, the laser light beam 100 may be coupled to an input waveguide 700 first, and then the laser light beam 100 is divided into a plurality of sub-beams through the beam splitting apparatus 200. Herein, the beam splitting apparatus 200 may be a star coupler or a cascaded 1×n waveguide beam splitter, where n is a natural number greater than or equal to 2.

The optical waveguide array 300 includes several sub-waveguides 310 arranged in parallel, the beam splitting apparatus 200 may equally divide the laser light beam 100 into the sub-waveguides 310, and each sub-waveguide 310 transmits each sub-beam to the predetermined waveguide emergent end 320. Herein, the optical waveguide array 300 has a diffusion and transmission region 330, a phase adjusting region 340, and a convergence and transmission region 350 connected in sequence. Each sub-waveguide 310 first diffusely transmits each sub-beam output from the beam splitting apparatus 200 in the diffusion and transmission region 330 and then enters phase adjusting region 340. Finally, each sub-waveguide 310 transmits each sub-beam into the convergence and transmission region 350 and converges each sub-beam to the predetermined waveguide emergent end 320.

After each sub-beam reaches the waveguide emergent end 320, it can be output to a free transmission region, that is, the light beam combining member 400, through the waveguide emergent end 320. Each sub-beam is subjected to far-field diffraction and superposition in the light beam combining member 400, the combined beam is focused on the predetermined light beam emergent surface 410, and the light beam emergent surface 410 is the output end of the light beam. The light beam output from the light beam emergent surface 410 then undergoes beam expansion and collimation processing by the light beam adjusting apparatus 500 to form a final scanning light beam.

During the transmission process of the abovementioned light beam, the phase adjusting apparatus 600 may be used to adjust the relative phase distribution between the sub-waveguides 310, so that the focus position of the light beam combined by the light beam combining member 400 on the light beam emergent surface 410 may be adjusted. When the focus position of the combined light beam on the light beam emergent surface 410 changes, a scanning angle of the final scanning light beam in the first direction also changes, so that light beam scanning in the first direction is achieved. Herein, the first direction may be a horizontal direction or other directions, and only the horizontal direction (pointed by the dotted arrow in FIG. 3) is used for description in this embodiment. FIG. 3 is a top view of the light beam scanning system.

In this embodiment, the beam splitting apparatus 200, the optical waveguide array 300, the light beam combining member 400, and the phase adjusting apparatus 600 may be integrated on a same SOI (silicon-on-insulator) chip, and the light beam adjusting apparatus 500 may be implemented using a mechanical structure, such as a collimating lens assembly.

In the light beam scanning system, the laser light beam 100 is divided into several sub-beams by the beam splitting apparatus 200, and the optical waveguide array 300 receives the several sub-beams and transmits the sub-beams to the predetermined waveguide emergent end 320. Each sub-beam emitted by the waveguide emergent end 320 is subjected to far-field diffraction and superposition in the light beam combining member 400, and the combined beam is focused on the predetermined light beam emergent surface 410. The light beam output through the light beam emergent surface 410 is expanded, collimated, and output by the light beam adjusting apparatus 500 to form a scanning light beam. Further, the relative phase distribution of the sub-waveguides 310 in the optical waveguide array 300 is adjusted by the phase adjusting apparatus 600, so that the focus position of the combined light beam on the light beam emergent surface 410 may be adjusted, the scanning angle of the scanning light beam is adjusted, and light beam scanning in the first direction is performed. The approach of combining and outputting light beams through waveguide gratings in the related art is changed in this embodiment. Each sub-beam is transmitted to the predetermined waveguide emergent end 320 through the optical waveguide array 300, so that each sub-beam may be subjected to far-field diffraction and superposition in the light beam combining member 400, and the combined beam is focused on the predetermined light beam emergent surface 410. By adjusting the relative phase distribution in the waveguide array, the position where the light beam is focused on the light beam emergent surface 410 may be adjusted, so that light beam scanning is achieved. Since the conventional waveguide grating surface vertical output structure is not used, the problem of large coupling interference caused by both small spacing and long waveguides in the related art is avoided when the waveguide grating surface vertical output structure is used. Further, to achieve light beam scanning through the above structure, only the sub-beams need to be gathered to the waveguide emergent end 320. Each sub-beam enters the free transmission region and is combined and focused on the light beam emergent surface 410, and the light beam is then output for scanning. A grating surface vertical emitter array in the conventional structure is not required to be used, and the difficulty and costs are lowered.

In one of the embodiments, the predetermined waveguide emergent end 320 is arranged on a circumference of a Rowland circle with a radius of 2R. The predetermined light beam emergent surface 410 is located inside the Rowland circle at a distance 2R from the waveguide emergent end 320, and R is a positive number.

The waveguide emergent end 320 of the optical waveguide array 300 is arranged on the circumference of a Rowland circle with a radius of 2R, so that the diffraction and superposition of the optical waveguide array 300 in a free space is equivalent to the effect of grating diffraction plus lens focusing, and an emergent speckle of a selected diffraction order may appear on a circle with a radius R. That is, the combined light beam is focused on a circumferential surface with a radius R, and a distance between the circumferential surface with a radius R and the waveguide emergent end 320 is 2R. Multiple waveguides are placed in a conventional AWG wavelength division multiplexer to receive output of different wavelengths. In this embodiment, an output end surface, that is, the light beam emergent surface 410, is directly etched on the SOI chip. By changing the phase distribution in the optical waveguide array 300, the fixed wavelength light beam is controlled to be output at different positions of the light beam emergent surface 410, and then scanning light beams at different angles are output perpendicular to the light beam emergent surface 410. The implementation solution is relatively simple. In the related art, generally, the waveguide grating causes the vertical output angle of the surface to change through wavelength tuning to achieve beam scanning orthogonal to the first direction, which requires the use of a tunable laser. Tunable lasers are often expensive, but light beam scanning can be achieved without the use of a tunable laser in the solution of the present application, so costs are lowered.

In one of the embodiments, a spacing between the sub-waveguides 310 at the waveguide emergent end 320 is less than a wavelength of the laser light beam 100, so that grating sidelobes combined by multiple light beams in the optical waveguide array 300 may be effectively suppressed, and high-efficiency beam control is achieved. Further, in this embodiment, the optical waveguide array 300 adopts a gradually approaching design. The sub-waveguides 310 in the optical waveguide array 300 are placed close to each other in a small region (convergence and transmission region 350) before entering the light beam combining member 400, so the coupling crosstalk between the sub-waveguides 310 is negligible.

In one of the embodiments, the light beam adjusting apparatus 500 includes a collimating lens assembly. In this embodiment, the collimating lens assembly may be placed in the emergent direction of the light beam emergent surface 410, and after the light beam is output vertically through the light beam emergent surface 410, the light beam is expanded and collimated by the collimating lens assembly, and a scanning light beam is then formed. When the combined light beam is at different positions of the light beam emergent surface 410, after being processed by the collimating lens assembly, there may be different light beam angles, so that one-dimensional scanning of the light beam in the horizontal direction can be achieved. Using the collimating lens assembly as the light beam adjusting apparatus 500 may reduce hardware costs of the light beam adjusting apparatus 500 and facilitate implementation.

In one of the embodiments, the phase adjusting apparatus 600 includes a phase modulator. A phase modulator is an optical modulator that changes the phase of light according to certain rules, and in this embodiment, the phase modulator may be arranged separately, or the phase modulator may be integrated into the waveguide array.

To be specific, the phase modulator may achieve waveguide phase modulation by coupling an optical signal in a silicon waveguide onto an electro-optical dielectric layer waveguide on the silicon waveguide by utilizing an electro-optical effect of a medium. Alternatively, the phase modulator may perform waveguide phase modulation by injecting a pin junction current into the silicon waveguide. Alternatively, the phase modulator performs the waveguide phase modulation by a metal heater placed above the silicon waveguide by utilizing a thermo-optical effect of silicon.

In one of the embodiments, the light beam combining member 400 may be located in the silicon waveguide of the SOI chip, that is, each sub-beam output through the waveguide emergent end 320 is combined and focused in the silicon waveguide. Alternatively, the light beam combining member 400 may be located on the electro-optical dielectric layer waveguide on the silicon waveguide, that is, the optical signal in the silicon waveguide is coupled to the electro-optical dielectric layer waveguide above, and then beam combining and focusing is performed in the electro-optical dielectric layer waveguide.

In one of the embodiments, the electro-optical dielectric layer waveguide includes a lithium niobate waveguide.

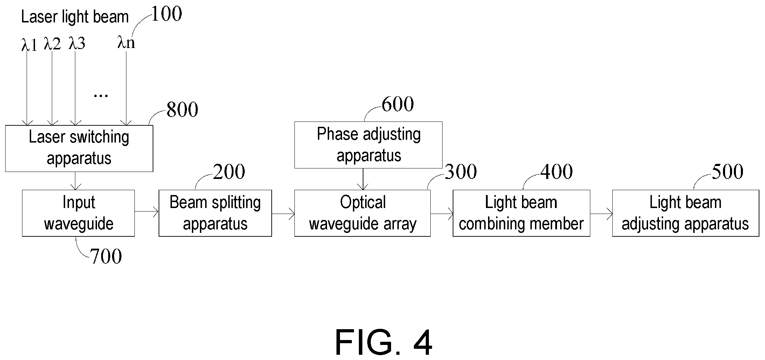

In one of the embodiments, with reference to FIG. 4, the light beam scanning system provided by this embodiment further includes a laser switching apparatus 800, and the laser switching apparatus 800 is used to switch the laser light beam 100 of different wavelengths to the beam splitting apparatus 200.

In this embodiment, the laser switching apparatus 800 adjusts the focus position of the combined light beam on the light beam emergent surface 410 by switching the laser light beam 100 of different wavelengths, so as to adjust a light beam scanning angle in the first direction. In addition to changing the focus position of the light beam on the light beam emergent surface 410 through phase modulation, laser of different wavelengths and the laser switching apparatus 800 are also arranged in this embodiment. By using the laser switching apparatus 800 to change the wavelength of the input laser, the focus position of the light beam on the light beam emergent surface 410 may also be changed.

In practical applications, the phase distribution may be modulated while keeping the wavelength fixed, or the laser light beam 100 of different wavelengths may be switched while keeping the phase distribution fixed. By combining wavelength conversion and phase modulation, a wider range of focusing of the light beam on the light beam emergent surface 410 is achieved, and a wider light beam scanning range is further obtained after expansion and collimation performed by the light beam adjusting apparatus 500.

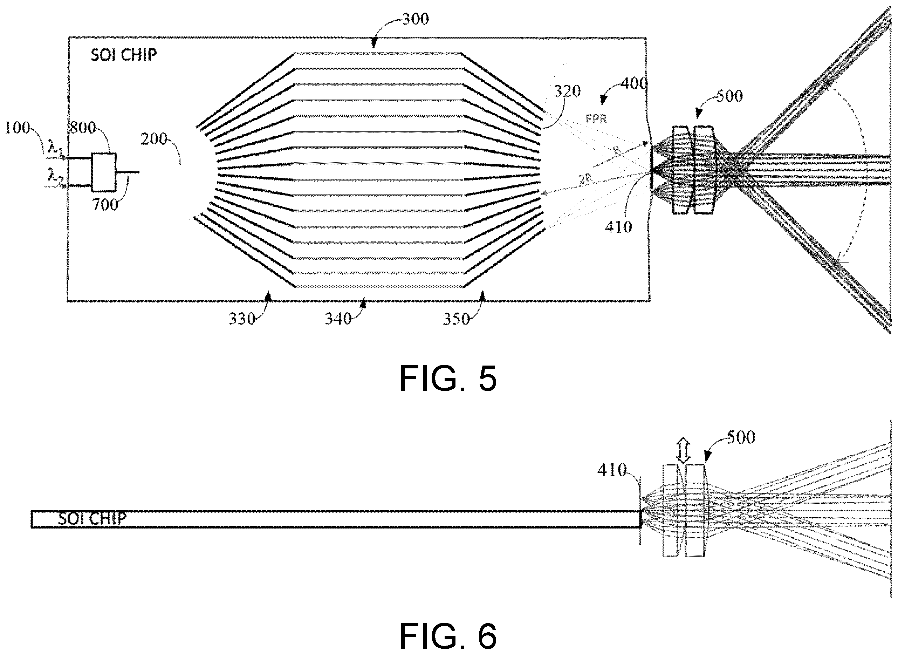

Herein, with reference to FIG. 5, the laser switching apparatus 800 may be an optical switch, an input end of the optical switch is connected to the laser light beam 100 of different wavelengths, and an output end is connected to the input waveguide 700. The switched laser light is transmitted to the beam splitting apparatus 200 via the input waveguide 700. Since phase modulation and optical switching speeds can reach GHz, beam scanning in the first direction even for thousands of sampling points may be completed in the order of microseconds.

In addition to the implementation of light beam scanning in the first direction, the beam scanning system of this embodiment may also implement light beam scanning in a second direction. In one of the embodiments, the light beam scanning system provided by this embodiment further includes a moving platform, and the moving platform is connected to the light beam adjusting apparatus 500 and is used to move the light beam adjusting apparatus 500 in the second direction to perform light beam scanning in the second direction. The second direction may be a vertical direction or other directions, and only the vertical direction is used for description in this embodiment.

FIG. 6 is a front view of the light beam scanning system. With reference to FIG. 6, in practical applications, the light beam adjusting apparatus 500 may be moved in the vertical direction (pointed by the two-way arrow in the figure) by moving the platform, thereby changing the position where the light beam output from the light beam emergent surface 410 falls on the light beam adjusting apparatus 500 in the vertical direction. The change in this position causes the angle of the final output scanning light beam to change in the vertical direction, so that light beam scanning in the vertical direction is achieved. On the basis of high-speed scanning in the horizontal direction, scanning in the vertical direction only requires a scanning frequency of >30Hz to achieve two-dimensional light beam scanning of >30 frames/s.

In this embodiment, the moving platform may include a driving apparatus, the driving apparatus is connected to the light beam adjusting apparatus 500, and the moving apparatus drives the light beam adjusting apparatus 500 to move in the second direction. The driving apparatus may be driving equipment such as a linear motor or a DC motor, so equipment costs are lower and is easy to implement.

The technical features of the above-described embodiments may be combined arbitrarily. In order to simplify the description, not all possible combinations of the technical features in the above embodiments are described. However, as long as there is no contradiction in the combinations of these technical features, these combinations should be considered to be within the scope of the description in this specification.

The abovementioned embodiments only represent several embodiments of the disclosure, and the descriptions thereof are specific and detailed, but should not be construed as a limitation on the scope of the invention patent. It should be pointed out that for a person having ordinary skill in the art, without departing from the concept of the disclosure, several modifications and improvements can be made, which all belong to the protection scope of the disclosure. Therefore, the protection scope of the patent of the disclosure should be subject to the appended claims.

## Claims

1. A light beam scanning system, **characterized in that** the light beam scanning system comprises:
a beam splitting apparatus receiving a laser light beam, dividing the laser light beam into a plurality of sub-beams, and emitting the sub-beams;
an optical waveguide array arranged in an outputting direction of the beam splitting apparatus and configured to receive the plurality of sub-beams and transmit the plurality of sub-beams to a predetermined waveguide emergent end, wherein the optical waveguide array comprises a convergence and transmission region, and each of the sub-beams is focused on the waveguide emergent end through the convergence and transmission region;
a light beam combining member connected to the optical waveguide array, wherein each sub-beam emitted by the waveguide emergent end is subjected to far-field diffraction and superposition in the light beam combining member, and is combined and focused on a predetermined light beam emergent surface;
a light beam adjusting apparatus arranged in an emergent direction of the light beam emergent surface and configured to expand and collimate a light beam emitted from the light beam emergent surface to form a scanning light beam; and
a phase adjusting apparatus connected to the optical waveguide array and adjusting a relative phase distribution of sub-waveguides in the optical waveguide array, so as to adjust a focus position of a combined light beam on the light beam emergent surface and carry out light beam scanning in a first direction.

2. The light beam scanning system according to claim 1, **characterized in that** the predetermined waveguide emergent end is arranged on a circumference of a Rowland circle with a radius of 2R, and the predetermined light beam emergent surface is located inside the Rowland circle at a distance 2R from the waveguide emergent end, and R is a positive number.

3. The light beam scanning system according to claim 1, **characterized in that** a spacing between the sub-waveguides at the waveguide emergent end is less than a wavelength of the laser light beam.

4. The light beam scanning system according to claim 1, **characterized in that** the beam splitting apparatus comprises a star coupler or a cascaded 1×n waveguide beam splitter, and n is a natural number greater than or equal to 2.

5. The light beam scanning system according to claim 1, **characterized in that** the light beam adjusting apparatus comprises a collimating lens assembly.

6. The light beam scanning system according to claim 1, **characterized in that** the phase adjusting apparatus comprises a phase modulator.

7. The light beam scanning system according to claim 6, **characterized in that** the phase modulator performs waveguide phase modulation by coupling an optical signal in a silicon waveguide to an electro-optical dielectric layer waveguide on the silicon waveguide by utilizing an electro-optical effect of a medium, the phase modulator performs the waveguide phase modulation by injecting a pin junction current into the silicon waveguide, or the phase modulator performs the waveguide phase modulation by a metal heater placed above the silicon waveguide by utilizing a thermo-optical effect of silicon.

8. The light beam scanning system according to claim 7, **characterized in that** the dielectric layer waveguide comprises a lithium niobate waveguide.

9. The light beam scanning system according to claim 1, **characterized in that** the light beam scanning system further comprises:
a laser switching apparatus configured to switch the laser light beam of different wavelengths to the beam splitting apparatus,
wherein the laser switching apparatus adjusts the focus position of the combined light beam on the light beam emergent surface by switching the laser light beam of different wavelengths, so as to adjust a light beam scanning angle in the first direction.

10. The light beam scanning system according to claim 1, **characterized in that** the light beam scanning system further comprises:
a moving platform connected to the light beam adjusting apparatus and configured to move the light beam adjusting apparatus in a second direction to perform light beam scanning in the second direction.
